(19) **Europäisches Patentamt / European Patent Office / Office européen des brevets**

(11) **EP 4 106 487 B1**

(12) **EUROPEAN PATENT SPECIFICATION**

(45) Date of publication and mention
of the grant of the patent:
**08.11.2023   Bulletin 2023/45**

(21) Application number: **21179264.3**

(22) Date of filing: **14.06.2021**

(51) International Patent Classification (IPC):
*H04W 84/04* (2009.01)     *H04B 7/155* (2006.01)
*H04W 84/00* (2009.01)

(52) Cooperative Patent Classification (CPC):
**H04W 84/047; H04B 7/155;** H04W 84/005

(54) **APPARATUS, METHOD AND COMPUTER PROGRAM FOR A WIRELESS COMMUNICATION DEVICE AND FOR A WIRELESS RELAY STATION**

VORRICHTUNG, VERFAHREN UND COMPUTERPROGRAMM FÜR EINE DRAHTLOSE KOMMUNIKATIONSVORRICHTUNG UND FÜR EINE DRAHTLOSE RELAISSTATION

APPAREIL, PROCÉDÉ ET PROGRAMME INFORMATIQUE POUR UN DISPOSITIF DE COMMUNICATION SANS FIL ET POUR UNE STATION DE RELAIS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.12.2022   Bulletin 2022/51**

(73) Proprietors:
• **Volkswagen Aktiengesellschaft**
  **38440 Wolfsburg (DE)**
• **Seat, S.A.**
  **08760 Martorell (ES)**

(72) Inventors:
• **PFADLER, Andreas**
  **13357 Berlin (DE)**
• **MONTERO BAYO, Luca**
  **08028 Barcelona (ES)**

(74) Representative: **2SPL Patentanwälte PartG mbB**
  **Landaubogen 3**
  **81373 München (DE)**

(56) References cited:
EP-A1- 3 761 751      WO-A1-2013/070245
WO-A1-2018/085568      WO-A1-2018/196497
WO-A1-2018/202798

• **"3rd Generation Partnership Project; Technical Specification Group Services and System Aspects; Study on Vehicle-Mounted Relays; Stage 1 (Release 18)", 3GPP DRAFT; S1-211312, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 9 June 2021 (2021-06-09), XP052027782, Retrieved from the Internet: URL:https://ftp.3gpp.org/tsg_sa/WG1_Serv/T SGS1_94e_ElectronicMeeting/Docs/S1-211312. zip S1-211312_FS_VMR_TR22839v030_rm.docx [retrieved on 2021-06-09]**

## Description

The present invention relates to a wireless communication device, a system comprising a wireless communication device and a wireless relay station, a method comprising steps being performed by a wireless communication device, and optionally steps being performed by a wireless relay station, and a computer program for a wireless communication device.

The development of the 5th-generation mobile communication standard (5G) of the 3rd-Generation Partnership Project (3GPP) has brought increased attention to the automotive industry, as vehicular communications are expected to leverage the most advanced features of the new generation of wireless communications. Among the main novelties of 5G, a wider range of usable spectrum (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem. Besides, the latest standard release (Rel. 16) has given support to Vehicle-to-Everything (V2X) communications with New Radio (NR) technology, allegedly allowing vehicles to make use of the same spectrum options, even for Vehicle-to-Vehicle (V2V) use cases.

The use of higher frequency bands in communications implies propagating in a harsher channel, where the free-space path loss scales with the frequency squared ($f^2$), and shading by obstacles and atmospheric effects (i.e., water vapor and oxygen absorption, or rain) take a non-negligible role.

Services relying on higher frequency systems, with their inherently high channel-induced attenuation, might find is challenging to deliver satisfactory QoS in some situations where signal power attenuation is increased, lowering the received Signal-to-Noise Ratio. This has sometimes motivated externalizing antennas for diverse services (such as 802.11p V2X, tolling, GPS and other services). For the passengers of a vehicle using Internet services - including the driver, who might intensify their Internet use in an increasingly automated mobility - the antennas equipped in their wireless communication device (i.e., User Terminal (UT)) will remain inside the vehicle, jeopardizing a stable mobile connection. As a result, some vehicles host a boosting system to wirelessly couple to the driver's UT, amplifying the signal through a wired set-up that leads to an external antenna. However, such a boosting system is also constrained in bandwidth, such that, if shared by multiple passengers, e.g., in a bus, the wireless throughput of a user might even deteriorate. Furthermore, the UT of a vehicle passenger might not be aware of the availability of the presence of a signal booster or relay in the vehicle the passenger is traveling in, or it might be confused by a signal booster or relay being hosted by another vehicle.

In US patent application US 2013/0337872 A1, a piconet base station and communication system for a vehicle is presented. In particular, a placement and operation of antennas of the piconet base station is discussed. However, a discovery and initiation of a connection between a UT and the piconet base station is not discussed.

International patent application WO 2018/202798 A1 relates to a concept for UE (User Equipment) Groups, UE Group Manager UEs and UE Group Member UEs. In said application, UEs, which are vehicles that communicate in a wireless communication systems, can either communicate directly with a base station or via a communication relay provided by a platoon leader. If a vehicle travels in the same direction and/or speed as a platoon, it can choose to connect to the relay provided by the platoon manager.

International patent application WO 2018/196497 A1 relates to a relay discovery and relay forwarding method. In said application, it is discussed that different relay stations can be used by vehicular UEs, namely mobile relays and road side unit relays, which are stationary relays, and that both types of relays can transmit information on which type of relay station they are.

International patent application WO 2018/085586 A1 relates to QoS support over an E-UTRA-based sidelink system. In said application, a relay UE can advertise QoS classes it supports

There may be a desire for an improved concept for wireless communication of a wireless communication device in a vehicle.

Various embodiments of the present disclosure are based on the finding that, while a wireless connectivity of a wireless communication device can be improved by a wireless relay station, there are some scenarios that may lead to adverse effects, and thus a reduced throughput or reliability of the communication of the wireless communication device. For example, if a vehicular wireless relay station is hosted by a public transportation vehicle, e.g., a public transportation bus, using said vehicular relay station might (only) be advantageous if the benefits of handing over the wireless communication device from a base station to the wireless relay station outweigh the costs. For example, this is the case if the wireless communication device and the wireless relay station do not move apart, e.g., if they share the same location, or if they move in the same direction. In this case, establishing a connection with the wireless relay station may provide benefits that outweigh the overhead, and thus costs, of the connection procedure.

The invention is defined by the appended set of claims.

Various aspects of the present disclosure relate to a method for a wireless communication device that is suitable for being carried around by a user. The method steps presented in the following are performed by the wireless communication device. Some additional method steps, which are illustrated in connection with a wireless relay station, may be performed by said wireless relay station. The method comprises detecting, by the wireless communication device, while the wireless communication device is connected to a base station, a presence of a wireless relay station. The method comprises determining, by the wireless communication device, whether a movement or non-movement of the wireless communication device coincides with a movement or non-movement of the wireless relay station. The method comprises connecting, by the wireless communication device, if the movement or non-movement of the wireless communication device coincides with the movement or non-movement of the wireless relay station, to the wireless relay station. As outlined above, if the movement or non-movement of the communication device coincides with the movement or non-movement of the wireless relay station, the benefits of establishing a connection to the wireless relay station may outweigh the costs of doing so.

In general, wireless relay stations may be categorized into two broad categories - a) wireless relay stations that are (at least temporarily) stationary, and b) wireless relay stations that are mobile. This categorization may be used to determine the movement or non-movement of the wireless relay station and may thus be used to determine whether the movement or non-movement of the wireless communication device and the wireless relay station coincide. In other words, the method may comprise determining, by the wireless communication device, whether the wireless relay station is a stationary wireless relay station or mobile wireless relay station. The act of determining whether the movement or non-movement of the wireless communication device coincides with the movement or non-movement of the wireless relay station may be based on the act of determining whether the wireless relay station is a stationary wireless relay station or mobile wireless relay station.

In some examples, the wireless relay station may announce (e.g., broadcast) information on whether the wireless relay station is a stationary or mobile wireless relay station. Accordingly, the act of determining whether the wireless relay station is a stationary wireless relay station or mobile wireless relay station may comprise obtaining (e.g., receiving) identification information on the wireless relay station. For example, the identification information may comprise information on whether the wireless relay station is a stationary wireless relay station or mobile wireless relay station. For example, the identification information may comprise an indicator (e.g., a single bit) identifying the wireless relay station as being "stationary" or "mobile", or the identification information may indicate a (planned) movement vector of the wireless relay station (with a zero-movement vector indicating a stationary wireless relay station and a non-zero movement vector indicating a mobile wireless relay station).

In various examples, as outlined above, the wireless relay station may be a vehicular relay station. In general, vehicular relay stations are hosted by vehicles. Vehicles, in turn, communicate via vehicular communication protocols, e.g., using vehicle-to-vehicle (V2V) or vehicle-to-everything (V2X) communication. Such vehicular communication protocols have recently evolved to use frequency bands and communication protocols that are similar to the frequency bands and communication protocols being used by wireless communication devices. For example, the 5.9 GHz band being used by IEEE (Institute of Electrical and Electronics Engineers) standard 802.11p is also used in WiFi 6E (according to IEEE standard 802.11ax). Furthermore, mobile communication systems of the 3GPP are being extended for use as vehicular communication systems, e.g., using Device-to-Device (D2D) functionality included in the 4G and 5G 3GPP standards. In some examples, the identification information may be received via a vehicular communication system. In other words, information provided by the vehicular relay station via the vehicular communication system may be received by the wireless communication device and used to determine whether the wireless relay station is mobile or stationary.

In the context of wireless communication, short time intervals may often suffice to complete wireless transmissions. For example, using mmWave transmissions, or even sub-6GHz transmissions under optimal conditions, dozens of websites can be transmitted in less than a second, and mailboxes or social media accounts can be updated in even less time. Thus, the coincidence in movement or non-movement might only be relevant for a short time, enough to complete impending transmissions. Therefore, a prediction is made on the connection time being required, and the coincidence may be based on the predicted connection time. For example, the method comprises determining a predicted connection time for the connection between the wireless communication device and the wireless relay station. The predicted connection time is a time required for completing one or more impending transmissions of the wireless communication device. The act of determining whether the movement or non-movement of the wireless communication device coincides with the movement or non-movement of the wireless relay station is based on the predicted connection time, by determining whether the wireless communication device and the wireless relay station are stationary at the same location, or whether the wireless communication device is moving in unison with the wireless relay station. In particular, the coincidence between the movement or non-movement of the wireless communication device and the wireless relay station is determined for the duration of the predicted connection time. In effect, the connection to the wireless relay station is established, if the movement or non-movement of the wireless communication device coincides with the movement or non-movement of the wireless relay station for the duration of the predicted connection time. After the predicted connection time has elapsed, the scheduled transmissions may have completed, and the determination of the coincidence of the movement or non-movement may be repeated when another transmission of data is to be scheduled.

In some examples, the method may comprise, by the wireless communication device, tracking a spatial distance between the wireless communication device and the wireless relay station. The act of determining whether the movement or non-movement of the wireless communication device coincides with the movement or non-movement of the wireless relay station may be based on the tracking of the spatial distance. By tracking the spatial distance, a movement vector of the wireless relay station relative to the wireless communication device may be determined, which may be used to determine the coincidence of the movement or non-movement.

Alternatively (or additionally), the movement vector may be broadcast by the wireless relay station and received by the wireless communication device. Accordingly, the method may comprise, by the wireless communication device, receiving information on a movement of the wireless relay station from the wireless relay station. The act of determining whether the movement or non-movement of the wireless communication device coincides with the movement or non-movement of the wireless relay station may be based on the received information on the movement of the wireless relay station. This may avoid the effort required for tracking the distance between the wireless communication device and the wireless relay station.

Again, the information on the movement may be transmitted via the vehicular communication system. For example, the wireless relay station may be a vehicular relay station, and the information on the movement of the wireless relay station may be received via a vehicular communication system.

In some cases, a wireless communication device may move (or stay stationary) together with a wireless relay station, but the wireless connection via the wireless relay station might be worse between the wireless communication device and the wireless relay station than between the wireless communication device and the wireless relay station, e.g., as a direct line-of-sight exists between the base station and the wireless communication device and the line-of-sight between the wireless communication device and the wireless relay station is blocked. Such scenarios can be identified by determining the received signal power of the respective wireless communication between the wireless communication device and the base station or wireless relay station, respectively. For example, the method may comprise, by the wireless communication device, determining a received signal power of the base station and of the wireless relay station. The wireless communication device may connect to the wireless relay station if the received signal power of the wireless relay station is greater than the received signal power of the base station. If this is the case, at least the connection between the wireless communication device and the wireless relay station may be suitable for improving the performance of the wireless connectivity of the wireless communication device.

Another factor is the Quality of Service (QoS) that can be provided by the wireless communication device, e.g., in comparison with the QoS being provided by the "direct" connection between the wireless communication device and the base station. The method may comprise, by the wireless communication device, determining an estimated QoS of the base station and of the wireless relay station. The wireless communication device may connect to the wireless relay station if the estimated QoS of the wireless relay station is better than the estimated QoS of the base station.

For example, information on the estimated QoS of the wireless relay station may be provided by the wireless relay station to the wireless communication device. The method may comprise, by the wireless communication device, receiving information on the estimated QoS of the wireless relay station from the wireless relay station. The act of determining the estimated QoS of the wireless relay station may be based on the received information on the estimated QoS of the wireless relay station. This way, the QoS of the wireless relay station can be estimated before a connection is established between the wireless communication device and the wireless relay station.

Various aspects of the present disclosure relate to a corresponding wireless communication device with an apparatus compriseing at least one interface for communicating with a base station and a wireless relay station. The apparatus comprises one or more processors, configured to perform the above method for the wireless communication device outlined above.

Various aspects of the present disclosure relate to acomputer program having a program which, when executed on a computer, a processor, or a programmable hardware component of a wireless communication device, enables the wireless communication device to perform the above method.

As is evident from the examples given above, at least some examples benefit from the wireless communication device receiving information from the wireless relay station, e.g., on a broadcast channel. Therefore, the wireless relay station may provide the respective information to the wireless communication device. Thus, the method may also comprise features being performed by the wireless relay station. The method may comprise, by the wireless relay station, providing information to a wireless communication device. The information comprising one or more of a) identification information on the wireless relay station, with the identification information comprising information on whether the wireless relay station is a stationary wireless relay station or mobile wireless relay station, b) information on a movement of the wireless relay station. The method may comprise, by the wireless relay station, establishing a connection with the wireless communication device. The connection may be established based on the provided information. By providing the information, the decision on whether a connection between the wireless communication device and the wireless relay station is to be established can be supported by the wireless relay station.

For example, as outlined above, the wireless relay station may be a vehicular relay station. For example, the information may be transmitted to the wireless communication device via a vehicular communication system. However, the connection with the wireless communication device may be established via a non-vehicular communication system. For example, the information may be broadcast periodically by the vehicular relay station over an existing mechanism of the vehicular communication system, so it need not be requested by the wireless communication device.

Various aspects of the present disclosure relate to a system comprising a corresponding apparatus for a wireless relay station and the wireless communication device. The apparatus for the wireless relay station comprises at least one interface for communicating with a wireless communication device. The apparatus for the wireless relay station comprises one or more processors, configured to perform the method for the wireless relay station, as outlined above.

Various aspects of the present disclosure relate to a corresponding computer program having a program code for performing at least one of the above methods, when the computer program is executed on a computer, a processor, or a programmable hardware component.

Some examples of apparatuses and/or methods will be described in the following by way of example only, and with reference to the accompanying figures, in which:

Figs. 1a and 1b     show flow charts of an example of a method for a wireless communication device;

Fig. 1c     shows a block diagram of an example of an apparatus for a wireless communication device, of a wireless communication device comprising such an apparatus, and of a vehicle comprising a wireless relay station;

Fig. 2a     shows a flow chart of an example of a method for a wireless relay station;

Fig. 2b     shows a block diagram of an example of an apparatus for a wireless relay station and of a wireless relay station comprising such an apparatus; and

Fig. 3     shows a schematic diagram of a scenario with three wireless communication devices, a base station and a wireless relay station being hosted by a public transportation bus.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Various aspects of the present disclosure relate to triggering a vehicle inside-out relaying for mobile devices in the cabin.

As outlined above, the Vehicle Penetration Loss (VPL) - i.e. the loss of signal power caused by the vehicle when communicating from indoor-to-outdoor or outdoor-to-indoor - can potentially add 10-15dB of signal power loss to the connection budget of wireless communications. This loss is accentuated (extra 10dB of loss) when the windows and windshield of the vehicle are metallized, a practice that can be widespread to increase a vehicle's thermal efficiency. This loss may affect the performance of those communicating devices whose antennas remain inside the cabin, such as the passenger's user equipment (UE) (e.g. smartphones), in the following also denoted wireless communication device, and severely make an impact on the experienced Quality of Service.

In some scenarios, a wireless relay station is available for use by the wireless communication device, e.g., a vehicular wireless communication device or a wireless relay station that is placed in vehicular infrastructure, such as traffic lights. The proposed concept addresses the task of how the wireless communication device, e.g., the smartphone, can find out whether or when it should use the vehicle or even infrastructure (e.g. traffic light) as a relaying node to increase its throughput, e.g., how the relaying system can be triggered.

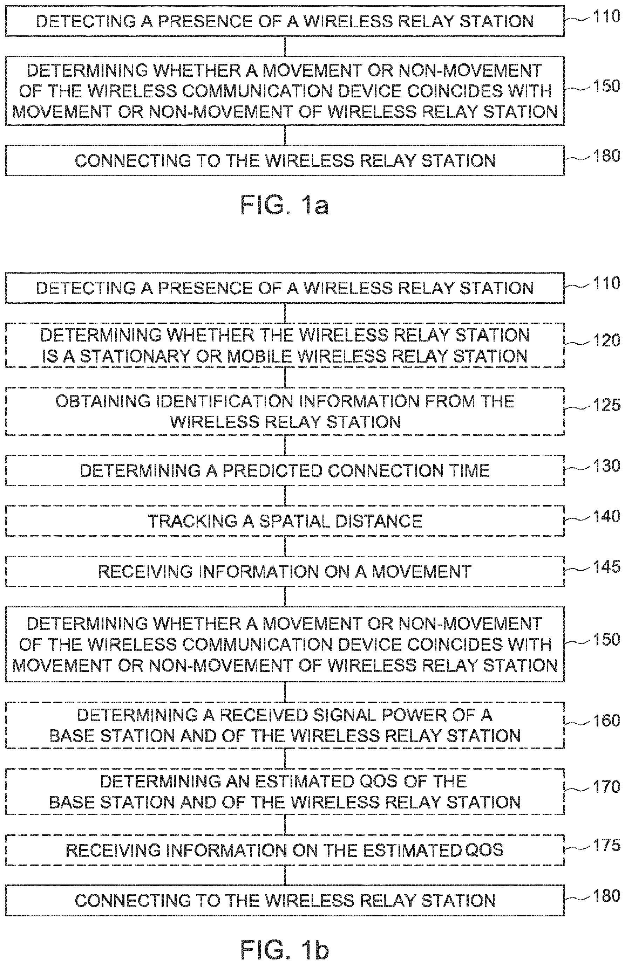

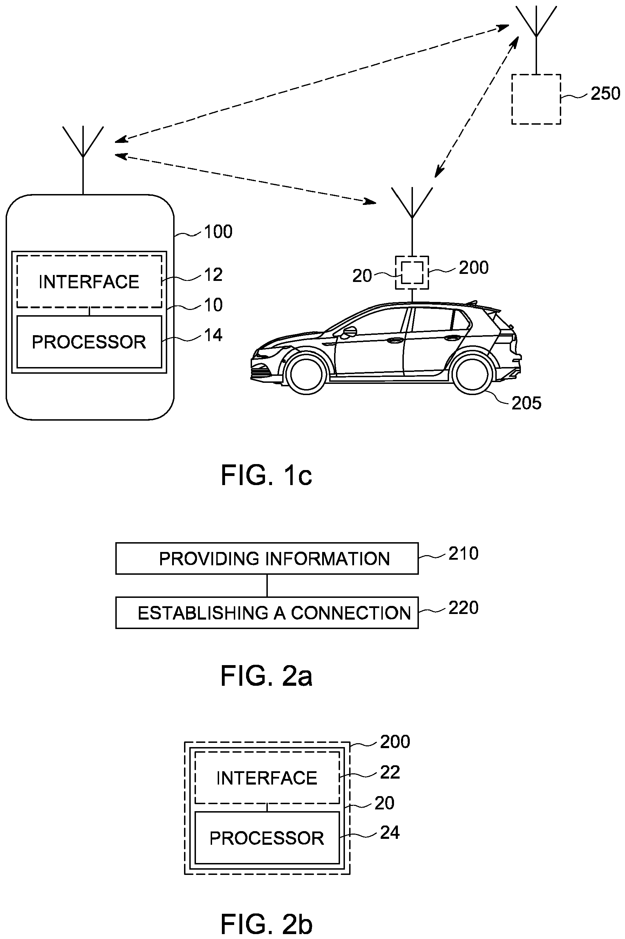

Figs. 1a and 1b show flow charts of an example of a method for a wireless communication device 100, which is performed by the wireless communication device. The method comprises detecting 110, while the wireless communication device is connected to a base station 250, a presence of a wireless relay station 200. The method comprises determining 150, whether a movement or non-movement of the wireless communication device coincides with a movement or non-movement of the wireless relay station. The method comprises connecting 180, by the wireless communication device, if the movement or non-movement of the wireless communication device coincides with the movement or non-movement of the wireless relay station, to the wireless relay station. For example, the method may be performed by the wireless communication device, e.g., by the apparatus 10 introduced in Fig. 1c.

Fig. 1c shows a block diagram of an example of a corresponding apparatus 10 for the wireless communication device 100. The apparatus 10 comprises at least one interface 12 for communicating with the base station 250 and the wireless relay station 200. The apparatus 10 further comprises one or more processors 14, configured to perform the method of Fig. 1a and/or 1b, e.g., in conjunction with the at least one interface 12. For example, the computational functionality of the apparatus 10 may be provided by the one or more processors 14, with communication being performed via the at least one interface 12. Fig. 1c further shows the wireless communication device 100 comprising the apparatus 10. Fig. 1c further shows a vehicle 205 comprising the wireless relay station 200. For example, the wireless relay station may be a vehicular relay station, i.e., a wireless relay station being hosted by a vehicle. Fig. 1c further shows a system comprising the wireless communication device 100 and the wireless relay station 200, and optionally the base station 250.

The following description relates to the method of Figs. 1a and/or 1b, to the corresponding apparatus of Fig. 1c, and to a corresponding computer program. Features introduced in connection with the method may likewise be introduced into the corresponding apparatus and computer program (or vice versa).

Various aspects of the present disclosure relate to a method, apparatus and computer program for a wireless communication device. In general, a wireless communication device is a device that is capable of communicating wirelessly. In particular, however, the wireless communication device may be a mobile wireless communication device, i.e., a wireless communication device that is suitable for being carried around by a user. For example, the wireless communication device may be a User Terminal (UT) or User Equipment (UE) within the meaning of the respective communication standards being used for mobile communication. For example, the wireless communication device may be a mobile phone, such as a smartphone, or another type of mobile communication device, such as a smartwatch, a laptop computer, a tablet computer, or autonomous augmented-reality glasses. For example, the wireless communication device and the wireless relay station (e.g., their interfaces 12; 22) may be configured to communicate in a cellular mobile communication system. Accordingly, the at least one interface 12; 22 may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the wireless communication device and the wireless relay station (e.g., their interfaces 12; 22) may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition, the wireless communication device, e.g., the at least one interface 12, may be suitable for, or configured to, communicating/communicate via non-cellular communication systems, e.g. via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the wireless communication device and the wireless relay station (e.g., their interfaces 12; 22) may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

In some examples, the connection between the wireless communication device and the base station may be a mmWave-based connection over the mobile communication system (e.g., using carrier frequencies of at least 20 GHz). The connection to be established between the wireless communication device and the wireless relay station may also be a mmWave-based connection, or may be performed at lower carrier frequencies, e.g. using carrier frequencies of at most 7.5 GHz. For example, the connection between the wireless communication device and the wireless relay station may be initiated using the protocols of the mobile communication system, or using a short-range communication system, such as via a wireless local area network outlined above.

The method comprises detecting 110, while the wireless communication device is connected to a base station 250, a presence of a wireless relay station 200. For example, the base station 250, the wireless relay station 200 and the wireless communication device 100 may communicate in/via a mobile communication system. The mobile communication system may comprise a plurality of transmission points or base stations operable to communicate radio signals with a wireless communication device or wireless relay station. In various examples, the mobile communication system may comprise wireless communication devices, wireless relay stations and base stations.

A base station can be located in the fixed or stationary part of the network or system. A base station may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station can be a wireless interface of a wired network, which enables transmission and reception of radio signals to a UE, such as a wireless communication device, or wireless relay station. Such a radio signal may comply with radio signals as, for example, standardized by 3GPP or, generally, in line with one or more of the above listed systems. Thus, a base station may correspond to a NodeB, an eNodeB, a BTS, an access point, etc. A wireless relay station may correspond to an intermediate network node in the communication path between a base station and a wireless communication device. A wireless relay station may forward a signal received from a wireless communication device to a base station, signals received from the base station to the mobile station transceiver, respectively.

The mobile communication system may be cellular. The term cell refers to a coverage area of radio services provided by a transmission point, a remote unit, a remote head, a remote radio head, a base station, wireless relay station or a NodeB, an eNodeB, respectively. The terms cell and base station may be used synonymously. In some examples a cell may correspond to a sector. For example, sectors can be achieved using sector antennas, which provide a characteristic for covering an angular section around a base station or remote unit. In some examples, a base station or remote unit may, for example, operate three or six cells covering sectors of 120° (in case of three cells), 60° (in case of six cells) respectively. Likewise a wireless relay station may establish one or more cells in its coverage area. A wireless communication device can be registered or associated with at least one cell, i.e. it can be associated to a cell such that data can be exchanged between the network and the mobile in the coverage area of the associated cell using a dedicated channel, connection or connection. A wireless communication device may hence register or be associated with a wireless relay station or base station directly or indirectly, where an indirect registration or association may be through one or more wireless relay stations.

Various examples of the wireless relay station may improve the cellular coverage in a vehicle, such as the vehicle 205. A wireless relay station may be used in order to connect multiple terminals (wireless communication devices) inside of the vehicle and provide an aggregated connection to a stationary cellular communication system via a wireless backhaul connection to a stationary cellular communications network, for example, over one or more external vehicle antennas. In the following the connection between a stationary base station and an external antenna of a vehicle relay node may be denoted as relay or backhaul link; the connection between a relay node and end user terminals will be denoted as access connection.

Such a wireless relay station may, for example, correspond to a relay as defined in 3GPP Release 10 and following, e.g., a moving relay or mobile relay as introduced in connection with 3GPP Release 12 and following, a wireless repeater (analog or digital), or a femto cell with a wireless backhaul connection. In case of a femto cell, the wireless backhaul connection could be provided over a separate cellular communication terminal, e.g., a 2G/3G/4G/5G modem. It is another finding that for the relay connection and for the access connection, respectively, the same or different frequency and spectrum resources can be used.

The proposed concept starts with the wireless communication device 100 being connected to the base station. In general, the wireless communication device 100 might only be connected to a single other entity of the mobile communication system, e.g., either to a base station, such as the base station 250, or to a wireless relay station, such as the wireless relay station. While the wireless communication device is connected to the base station, it discovers the presence of the wireless relay station, e.g. based on a transmission of the wireless relay station on a wireless broadcast channel of the mobile communication system, based on a transmission of the wireless relay station on a wireless broadcast channel of a vehicular communication system, or based on information on adjacent cells suitable as possible handover candidates being provided by the base station 200.

As is evident from the above example, while the communication between the wireless communication device and the wireless relay station and between wireless communication device and base station primarily occurs via the mobile communication system, additional communication between the wireless relay station and the wireless communication device, or at least from the wireless relay station to the wireless communication device, may occur via a vehicular communication system. Such communication may be carried out directly, e.g. by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

The proposed concept is based on determining 150, whether the movement or non-movement of the wireless communication device coincides with the movement or non-movement of the wireless relay station. In other words, the wireless communication device determines, whether it either is stationary at the same location the wireless relay station is stationary at, or moving in unison with, the wireless relay station. The former is the case if the wireless relay station is a stationary wireless relay station and the wireless communication device is also stationary, or rather not moving at a fast pace, or if both the wireless relay station and the wireless communication device are mobile, but currently not moving, e.g., as a vehicle comprising the wireless relay station is parked (e.g., during pickup of passengers) or stuck in traffic. The latter is the case if both the wireless relay station and the wireless communication device move in unison, e.g., if the wireless communication device is located in the vehicle hosting the wireless relay station. For both cases, the movement of the wireless relay station and of the wireless communication device may be estimated to determine whether the movement or non-movement of the wireless communication device coincides with the movement or non-movement of the wireless relay station.

In general, the movement or non-movement of the wireless relay station may depend on whether the wireless relay station is a stationary (e.g., hosted in a traffic light or bus stop) or mobile (e.g., hosted in a vehicle) wireless relay station. Accordingly, the method may comprise determining 120 whether the wireless relay station is a stationary wireless relay station or mobile wireless relay station. For example, the act of determining 150 whether the movement or non-movement of the wireless communication device coincides with the movement or non-movement of the wireless relay station is based on the act of determining whether the wireless relay station is a stationary wireless relay station or mobile wireless relay station. For example, if the wireless relay station is a stationary wireless relay station, the movement or non-movement of the wireless communication device might (only) coincide with the movement or non-movement if the wireless communication device is also (mostly) stationary, at least for a predicted connection time required for an impending data transmission of the wireless communication device.

In general, the wireless relay station being stationary or mobile may be broadcast by the wireless relay station. For example, the wireless relay station may broadcast identification information comprising information on whether the wireless relay station is a stationary wireless relay station or mobile wireless relay station, e.g., an indicator, such as a bit set in a header, indicating whether the wireless relay station is a stationary wireless relay station or mobile wireless relay station. For example, the identification information may be broadcast on a broadcast channel by the wireless relay station (or even by the base station, e.g., as part of a list of stations available for handover), e.g. a broadcast channel of the mobile communication system or a broadcast (e.g., as part of a Conditional Awareness Message, CAM) that is transmitted via the vehicular communication system. In other words, the identification information may be received, by the wireless communication device, via a broadcast channel of the mobile communication system or via the vehicular communication system. Accordingly, the act of determining 120 whether the wireless relay station is a stationary wireless relay station or mobile wireless relay station may comprise obtaining 125 the identification information on the wireless relay station. In other words, wireless relay station being mobile or stationary may be determined based on the identification information.

As outlined above, the coincidence between the movement or non-movement of the wireless communication device and the wireless relay station is not necessarily permanent. Oftentimes it suffices if the coincidence persists for time required for performing an impending transmission of the wireless communication device. The coincidence is determined for a so-called connection time, which may be the time required for completing one or more impending transmissions of the wireless communication device. Accordingly, the method comprises determining 130 a predicted connection time for the connection between the wireless communication device and the wireless relay station. For example, the predicted connection time may be estimated based on a data volume or length of a data stream of the one or more impending transmissions of the wireless communication device. The respective information on the data volume or length of the data stream may be provided by a transmission buffer or transmission scheduler of the wireless communication device. This connection time is used for the determination of the coincidence between the movement or non-movement of the wireless communication device and the wireless relay station. In other words, the act of determining 150 whether the movement or non-movement of the wireless communication device coincides with the movement or non-movement of the wireless relay station is based on the predicted connection time. In other words, the coincidence between the movement or non-movement of the wireless communication device and the wireless relay station is determined for the duration of the predicted connection time. For example, the predicted connection time may be used as a time horizon for the determination of the coincidence between the movement or non-movement of the wireless communication device and wireless relay station.

To determine the coincidence between the movement or non-movement of the wireless communication device and wireless relay station if the wireless relay station is mobile, or if the mobility of the wireless relay station is unknow, the movement of the wireless relay station may be determined. In the proposed concept, the movement of the wireless relay station may be determined using two approaches - by tracking the distance to the wireless relay station, and thus the movement of the wireless relay station, or by receiving information on the movement from the wireless relay station. In other words, the method may comprise tracking 140 a spatial distance between the wireless communication device and the wireless relay station. For example, the spatial distance between the wireless communication device and the wireless relay station may be tracked by determining the positions of the wireless communication device and of the wireless relay station in a coordinate system (e.g., based on a satellite-based positioning system for the wireless communication device, and based on wireless transmissions for the wireless relay station), and by determining the distance between the positions. Alternatively or additionally, the spatial distance may be determined by using the roundtrip time or wireless signals to determine the distance, e.g., using short-range wireless signaling that is based on Bluetooth or Ultra-Wide Band (UWB). The act of determining 150 whether the movement or non-movement of the wireless communication device coincides with the movement or non-movement of the wireless relay station may be based on the tracking of the spatial distance. For example, if the spatial distance remains similar (e.g., changes at most 10% during the predicted connection time), the movement or non-movement of the wireless communication device and of the wireless relay station may be deemed to coincide.

Alternatively or additionally, the wireless relay station may broadcast information on its movement (similar to the identification information, or together with the identification information), which may be received and evaluated by the wireless communication device. Accordingly, the method may comprise receiving 145 information on a movement of the wireless relay station from the wireless relay station, e.g., via the broadcast channel of the mobile communication system or via the vehicular communication system (e.g., as part of a CAM). The act of determining whether the movement or non-movement of the wireless communication device coincides with the movement or non-movement of the wireless relay station may be based on the received information on the movement of the wireless relay station. Accordingly, the method may comprise determining the movement of the wireless communication device, e.g., using an accelerometer of the wireless communication device, using a satellite-based positioning system, or using triangulation and knowledge on a positioning of base stations or wireless less access points.

Using this information, the determination 150 of whether a movement or non-movement of the wireless communication device coincides with a movement or non-movement of the wireless relay station may be made. For example, the movement or non-movement of the wireless communication device and of the wireless relay station may be deemed to coincide if a distance between the wireless communication device and the wireless relay station changes by at most 10% (or at most 5%, or at most 2.5%) over the predicted connection time. If this is the case, the connection to the wireless relay station may be established 180, with the connection to the base station being terminated.

In some cases, there are further criteria that may have to be met so the connection to the wireless relay station is established. For example, establishing the connection to the wireless relay station might (only) be beneficial for the wireless communication device if the QoS of the wireless communication device can be improved by switching to communicating via the wireless relay station. In this context, the QoS may comprise one or more of a throughput, a latency or latency budget and a reliability (e.g., error rate). This depends on two criteria - on the connection between the wireless communication device and the wireless relay station, and on the estimated QoS of the wireless relay station. If the estimated QoS of the wireless relay station is better than the QoS of the (currently active) connection between the wireless communication device and the base station, and if that QoS can be used over the connection between the wireless communication device and the wireless relay station, the connection to the wireless relay station may be established.

Accordingly, the performance of the connection between the wireless communication device and the wireless relay station may be estimated. A suitable proxy for the performance of the as-of-yet unestablished connection is the received signal power of the wireless relay station. For example, if the received signal power of the wireless relay station is already lower than the received signal power of the base station (at the wireless communication device), it is likely that switching over to the wireless relay station will not improve the wireless performance of the wireless communication device. Therefore, the method may comprise determining 160 the received signal power of the base station and of the wireless relay station, e.g., using the determination of the Received Signal Strength Information (RSSI) inherent to the mobile communication system. For example, an average moving mean of the received signal power may be used. For example, the wireless communication device might (only) connect 180 to the wireless relay station if the received signal power of the wireless relay station is greater than the received signal power of the base station. In other words, if the received signal power of the wireless relay station is lower than the received signal power of the base station, the wireless communication device might not switch its connection to the wireless relay station.

However, even if the received signal strength of the wireless relay station is higher than the received signal strength of the base station, the QoS of the wireless relay station might still be worse than the QoS of the direct connection between the wireless communication device and the wireless relay station, e.g. as the wireless backhaul between the wireless relay station and the base station (or another base station) is shared between the data transmissions of multiple wireless communication devices. For example, the method may comprise determining 170 an estimated QoS of the base station and of the wireless relay station, i.e., the estimated QoS over the connection between the wireless communication device and the base station and the estimated QoS over the connection between the wireless communication device and the base station (or another base station) via the wireless relay station, e.g. for the predicted connection time. For example, an average moving mean of the QoS (e.g., of the throughput, the latency, the error rate etc.) may be used. For example, the wireless communication device might connect 180 to the wireless relay station (only) if the estimated QoS of the wireless relay station is better than the estimated QoS of the base station.

In general, the QoS of the connection between the wireless communication device and the base station (without involving the wireless relay station) may be estimated based on the current QoS, e.g., by using the current QoS as estimated QoS, or by extrapolating the predicted QoS based on a time-series projection based on the current QoS. The predicted QoS of the connection via the wireless relay station, on the other hand, may depend on various factors, such as the utilization of the wireless relay station and the QoS of the (wireless) backhaul between the wireless relay station and the base station (or another base station). Therefore, the QoS of the wireless relay station may be predicted by the wireless relay station, and broadcast to the wireless communication device, e.g., via the broadcast channel of the mobile communication system or via the vehicular communication system (e.g., as part of a CAM). For example, the method may comprise receiving 175 information on the estimated QoS of the wireless relay station from the wireless relay station. The act of determining 170 the estimated QoS of the wireless relay station may be based on the received information on the estimated QoS of the wireless relay station (and based on the estimated QoS over the connection to the base station that is estimated by the wireless communication device).

The method finally comprises connecting 180, by the wireless communication device, if the movement or non-movement of the wireless communication device coincides with the movement or non-movement of the wireless relay station, and optionally if the received signal power of the wireless relay station is greater than the received signal power of the base station, and optionally if the estimated QoS of the wireless relay station is better than the estimated QoS of the base station, to the wireless relay station. For example, the connection to the wireless relay station may be established by the wireless communication device, i.e., triggered by the wireless communication device.

In various examples, the at least one interface 12 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The at least one interface 12 may comprise further components to enable according communication in the mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The at least one interface 12 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the at least one interface 12 may serve the purpose of transmitting or receiving or both, transmitting and receiving, information, such as information, input data, control information, further information messages, etc.

As shown in Fig. 1c the at least one interface 12 is coupled to the one or more processors 14 at the apparatus 10. For example, the one or more processors 14 may be implemented using one or more processing units, one or more processing devices or any means for processing, such as a processor, a computer or a programmable hardware component being operable with accordingly adapted software. In other words, the described functionality of the one or more processors may as well be implemented in software, which is then executed on one or more programmable hardware components. Such hardware components may comprise a general-purpose processor, a Digital Signal Processor (DSP), a micro-controller, etc.

For example, the vehicle 205 may be a land vehicle, such a road vehicle, a car, an automobile, an off-road vehicle, a motor vehicle, a bus, a robo-taxi, a van, a truck or a lorry. Alternatively, the vehicle 205 may be any other type of vehicle, such as a train, a subway train, a boat or a ship. For example, the proposed concept may be applied to public transportation (trains, bus) and future means of mobility (e.g., robo-taxis).

More details and aspects of the wireless communication device and of the wireless relay station are mentioned in connection with the proposed concept or one or more examples described above or below (e.g. Fig. 2a to 3). The wireless communication device and/or the wireless relay station may comprise one or more additional optional features corresponding to one or more aspects of the proposed concept or one or more examples described above or below.

In Figs. 1a to 1c, the focus of the present disclosure was on the wireless communication device. As is evident from the examples given above, the wireless communication device benefits from information being provided by the wireless relay station, to make the determination on whether or when to establish the connection with the wireless relay station. In the following, a method and apparatus for the wireless relay station are presented, which may be used to provide said information to the wireless communication device.

Fig. 2a shows a flow chart of an example of a method for the wireless relay station 200 (e.g., the wireless relay station shown in connection with Figs. 1a to 1c). The io method steps of the method of Fig. 2a may be combined with the steps of the method of Fig. 1a to form a method that falls inside the scope of the claims. The method comprises providing 210 information to the wireless communication device 100 (e.g., the wireless communication device 100 shown in connection with Figs. 1a to 1c). The information comprises one or more of a) identification information on the wireless relay station, the identification information comprising information on whether the wireless relay station is a stationary wireless relay station or mobile wireless relay station, b) information on a movement of the wireless relay station, and c) information on an estimated QoS of the wireless relay station. The method comprises establishing 220 a connection with the wireless communication device, wherein the connection is established based on the provided information. For example, the method may be performed by the wireless relay station 200, e.g., by the apparatus 20 of Fig. 2b.

Fig. 2b shows a block diagram of an example of a corresponding apparatus 20 for the wireless relay station 200 and of the wireless relay station 200 comprising the apparatus 20. The apparatus 20 may form a system together with the wireless communication device of Fig. 1b that falls inside the scope of the claims. The apparatus 20 comprises at least one interface 22 for communicating with the wireless communication device 100. The apparatus 20 further comprises one or more processors 24, configured to perform the method of Fig. 2a, , e.g., in conjunction with the at least one interface 22. For example, the computational functionality of the apparatus 20 may be provided by the one or more processors 24, with communication being performed via the at least one interface 24. Examples further provide a vehicle (as shown in Fig. 1c) comprising the wireless relay station 200 with the apparatus 20. For example, the wireless relay station 200 may be a vehicular relay station, i.e., a wireless relay station being hosted by a vehicle.

The following description relates to the method of Fig. 2a, the corresponding apparatus 20 of Fig. 2b, and to a corresponding computer program. Features introduced in connection with the method may likewise be introduced into the corresponding apparatus.

The wireless relay station initially introduced in connection with Figs. 1a to 1c, and introduced in more detail in Figs. 2a and 2b, is a counterpart to the wireless communication device introduced in connection with Figs. 1a to 1c. The wireless communication device makes a determination on whether or when to connect to the wireless relay station. Optionally, the wireless relay station supports that determination with the information outlined above. To establish the connection, and to provide the above-mentioned information, the wireless communication device and the wireless relay station may communicate with each other. In this context, two types of communication may be distinguished - communication being performed before the connection establishment, and communication that occurs as part of, and after, the connection establishment.

The communication that occurs before connection establishment, and that may be used to provide said information, may be based on broadcasts of the wireless relay station, e.g., via the mobile communication system and/or the vehicular communication system introduced in connection with Figs. 1a to 1c. Accordingly, the wireless relay station, and in particular the at least one interface 22, may be suitable for, or configured to, communicate in/via the mobile communication system and/or the vehicular communication system. For example, the wireless relay station, and in particular the at least one interface 22, may be configured to communicate via one or more antennas placed at the outside of the vehicle via the mobile communication system or via the vehicular communication system, e.g., with other communication devices outside the vehicle, such as a base station for the purpose of maintaining a wireless backhaul connection. Additionally, the wireless relay station, and in particular the at least one interface 22, may be configured to communicate via short-range communication, e.g., via a wireless local area network according to a variant of the IEEE 802.11 standard, via Bluetooth or via UWB.

For example, the information provided 210 from the wireless relay station to the wireless communication device may be provided as broadcast, e.g., via a broadcast channel of the mobile communication system or as broadcast via the vehicular communication system (e.g., as CAM). The connection establishment, on the other hand, may establish a connection via the mobile communication system. Correspondingly, in some examples, the information may be provided 210 via the vehicular communication system and the connection may be established via a non-vehicular communication system (or at least communication system that is not exclusively used for vehicular communication), such as the mobile communication system. In general, the connection being established 220 is based on the provided information. For example, the connection establishment 220 may be triggered, or be made dependent, based on the provided 210 information. For example, the connection establishment may be triggered by the wireless communication device. For example, the wireless relay station may receive a request for connection establishment that is transmitted by the wireless communication device and establish 220 the connection based on the received request.

In general, the wireless relay station may determine the information provided to the wireless communication device. For example, the identification on the wireless relay station that comprises information on whether the wireless relay station is a stationary wireless relay station or mobile wireless relay station may be static information, which might be stored in a storage device or memory of the wireless communication device, and which may be broadcast periodically by the wireless relay station, e.g., via the broadcast channel of the mobile communication system or via the vehicular communication system.

The two other types of information, however, may be updated continuously. For example, the wireless relay station may provide information on the movement of the wireless relay station to the wireless communication device. Therefore, the method may comprise determining (e.g., predicting) the movement of the wireless relay station, e.g., based on a current movement of the wireless relay station and/or based on a planned movement of the wireless relay station that is due to a planned route of the vehicle hosting the wireless relay station. For example, the current movement of the wireless relay station may be determined using a satellite-based positioning system, using a triangulation based on wireless signals of wireless transmitters having known coordinates, or using an accelerometer of the wireless relay station. The planned movement of the wireless relay station may be obtained from a navigation system and/or autonomous driving system of the vehicle hosting the wireless relay station, or from a schedule of a public transportation vehicle hosting the wireless relay station. Once the movement of the wireless relay station is predicted, the information on the movement may be compiled and provided to the wireless communication device.

The wireless relay station may provide information on the estimated QoS of the wireless relay station to the wireless communication device. In this context, the estimated QoS of the wireless relay station may relate to the estimated QoS that can be made available to the wireless communication device. For example, if n wireless communication devices access the wireless relay station, each wireless communication device might be guaranteed $\frac{1}{n}$ of the overall throughput capacity of the wireless relay station. In practice, as most wireless communication devices do not continuously transmit data, the throughput available for the individual wireless communication devices may be higher than the guaranteed share of the overall throughput. Furthermore, the more wireless communication devices are connected to the wireless relay station, the higher the latency may become. The method may comprise estimating the QoS of the wireless relay station that can be made available to the wireless communication device, e.g., based on the QoS of the (wireless) backhaul connection between the wireless relay station and a base station, and based on the number of wireless communication devices accessing the wireless relay station. Once the QoS that can be made available to the wireless communication device is estimated, the information on the estimated QoS may be determined, and the information may be provided to the wireless communication device.

All three types of information mentioned above may be provided upon request of the wireless communication device or may be broadcast periodically via the broadcast channel of the mobile communication system or via the vehicular communication system (e.g., as part of a CAM).

In some examples, the wireless relay station may merely act as signal relay between the wireless communication device and a base station. In other words, after the connection has been established, the wireless relay station may repeat (and amplify) signals received from the wireless communication device so they are transmitted to the base station, and repeat signals from the base station and destined for the wireless communication device so they are transmitted to the wireless communication device. For example, such operation of the wireless relay station may be largely mobile network operator-independent, i.e., the mobile network operator may communicate directly with the wireless communication device, with the wireless relay station acting as a (transparent) signal relay.

In some examples, the functionality of the wireless relay station is more complex, however. For example, the wireless relay station may act as a small-cell (e.g., pico-cell or femto-cell) base station towards the wireless communication device, or as a data gateway. In the former case, the wireless relay station may operate one or more cells that provide cellular coverage for the wireless communication device (and other wireless communication devices). In the latter case, merely an internet protocol (IP)-based connection may be established between the wireless communication device and the wireless relay station. In both cases, the wireless relay station may act as gateway for establishing a data connection for the wireless communication device. In general, the wireless communication device may establish one or more wireless backhaul connections to one or more base stations of one or more mobile network providers, e.g., via one or more radio access technologies.

In various examples, the at least one interface 22 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless, or wireline and it may be configured to communicate, i.e. transmit or receive signals, information with further internal or external components. The at least one interface 22 may comprise further components to enable according communication in the mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The at least one interface 22 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the at least one interface 22 may serve the purpose of transmitting or receiving or both, transmitting and receiving, information, such as information, input data, control information, further information messages, etc.

As shown in Fig. 2b the at least one interface 22 is coupled to the one or more processors 24 at the apparatus 20. For example, the one or more processors 24 may be implemented using one or more processing units, one or more processing devices or any means for processing, such as a processor, a computer or a programmable hardware component being operable with accordingly adapted software. In other words, the described functionality of the one or more processors may as well be implemented in software, which is then executed on one or more programmable hardware components. Such hardware components may comprise a general-purpose processor, a Digital Signal Processor (DSP), a micro-controller, etc.

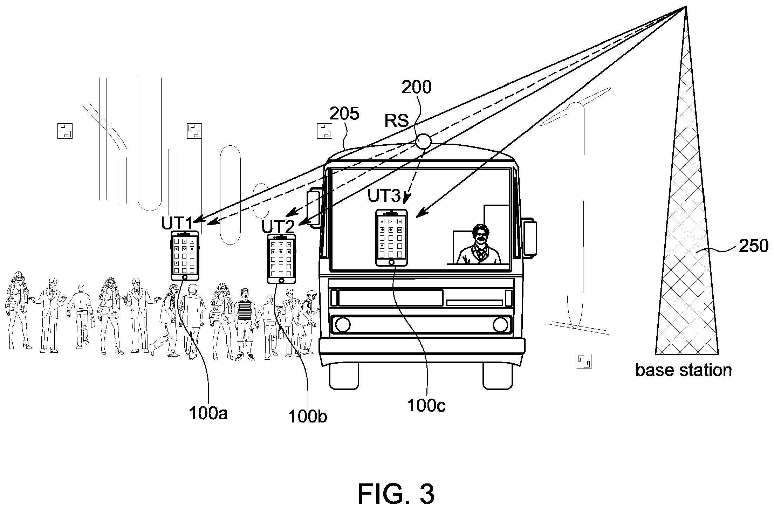

More details and aspects of the wireless relay station and wireless communication device are mentioned in connection with the proposed concept or one or more examples described above or below (e.g. Fig. 1a to 1c, 3). The wireless relay station and/or wireless communication device may comprise one or more additional optional features corresponding to one or more aspects of the proposed concept or one or more examples described above or below.

In the following, an example of the procedure outlined in Figs. 1a to 2b is given. The proposed concept is based on determining the type and status of the relaying system (i.e., of the wireless relay station): moving, stand still, offered QoS (e.g., throughput) through relaying. The offered relaying QoS may be compared with the direct base station connection and predicted for how long it might be used (i.e., the predicted connection time). If the comparison indicates that the connection via the relay is beneficial, the vehicular relay may be used as a relaying system.

The proposed concept addresses the challenge of how a smartphone can determine when it should use the vehicle or even infrastructure (e.g. traffic light) as a relaying node to improve its QoS, and of how the relaying system can be triggered.

In an example of the proposed concept, (I) the US (i.e., the wireless communication device) is connected to a base station. (II) The UT detects the presence of a RS (Relay station, i.e., the wireless relay station). (III) The UT identifies the type of the RS: static or moving RS. (IV) The UT may perform a verification and prediction of whether both locations (UT and RS) will stay together in time and space ($t_{pc}$ being the predicted connection time in seconds and $s_{spd}$ being the spatial paring distance in meters): if the UT is moving with the RS or both are standing still, e.g. is it located in the cabin of the RS (i.e. the vehicle hosting the RS) or is the RS moving away from it? If both stay together, than it may continue with (V). If not, it may continue with (II). Note that the RS may share information which helps the UT to determine $t_{pct}$ and $s_{spd}$, e.g. by using a Cooperative Awareness Message (CAM) a bus could state that it is parking for 5 minutes. (V) It compares the received power or estimated QoS provided by the base station with the one offered by the RS. It may use here an average moving mean of the QoS or received power. (VI) In case the RS offers better QoS then the UT starts paring with RS and start to use it as RS. (VII) The approach may start at (V) after the $t_{pct}$ time has passed or the $s_{spd}$ is too large.

In Fig. 3, a schematic diagram of a scenario with three wireless communication devices (UT) UT1 100a; UT2 100b; and UT3 100c, a base station 250 and a wireless relay station 200 being hosted by a public transportation bus 205 is shown. In the example shown in Fig. 3, a bus serves as a Relaying System (RS), i.e., the bus hosts the wireless relay station 200. In the example of Fig. 3, the three UT's 100a-100c are considered. UT1 is queuing in the middle of the waiting line in front of the bus to enter it and has Line-of-Sight (LOS) to the base station. UT2 is queuing in front of the bus door and has Non-Line-of-Sight (NLOS) to the base station. The third UT3 is already inside of the bus with NLOS to the base station. Using the numerals introduced above, UT1 waits at (V) as the RS offers worse QoS compared to the base station. UT2 waits at (VII). with a certain $t_{pct}$ and $s_{spd}$ which will be shorter and further away compart to UT3. Therefore, it may check (V) more frequently than UT3. UT3 also waits at (VII), with a longer $t_{pct}$ and shorter $s_{spd}$ than UT2.

More details and aspects of the example given in connection with Fig. 3 are mentioned in connection with the proposed concept or one or more examples described above or below (e.g. Fig. 1a to 2b). The wireless communication devices and/or the wireless relay station may comprise one or more additional optional features corresponding to one or more aspects of the proposed concept or one or more examples described above or below.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, as long as these combinations do not depart from the scope of the invention that is defined by the appended claims, and unless it is stated in the individual case that a particular combination is not intended. Furthermore, features of a claim should also be included for any other independent claim, even if that claim is not directly defined as dependent on that other independent claim.

## List of reference signs

| | |
|---|---|
| 10 | Apparatus |
| 12 | At least one interface |
| 14 | One or more processors |
| 20 | Apparatus |
| 22 | At least one interface |
| 24 | One or more processors |
| 100, 100a-100c | Wireless communication device |
| 110 | Detecting a presence of a wireless relay station |
| 120 | Determining whether the wireless relay station is a stationary or mobile wireless relay station |
| 125 | Obtaining identification information from the wireless relay station |
| 130 | Determining a predicted connection time |
| 140 | Tracking a spatial distance |
| 145 | Receiving information on a movement |
| 150 | Determining, whether a movement or non-movement of the wireless relay station coincides with a movement or non-movement of the wireless com- |

munication device

160 Determining a received signal power of a base station and of the wireless relay station

170 Determining an estimated QoS of the base station and of the wireless relay station

175 Receiving information on the estimated QoS

180 Connection to the wireless relay station

200 Wireless relay station

205 Vehicle

210 Providing information

220 Establishing a connection

250 Base station

**Claims**

1. A method comprising the following steps performed by a wireless communication device (100) that is suitable for being carried around by a user, the method comprising:

   Detecting (110), while the wireless communication device is connected to a base station (250), a presence of a wireless relay station (200);
   determining (130) a predicted connection time for a connection to be established between the wireless communication device and the wireless relay station, the predicted connection time being a time required for completing one or more impending transmissions of the wireless communication device;
   Determining (150), whether a movement or non-movement of the wireless communication device coincides with a movement or non-movement of the wireless relay station based on the predicted connection time, by determining whether the wireless communication device and the wireless relay station are stationary at the same location, or whether the wireless communication device is moving in unison with the wireless relay station,
   wherein the coincidence between the movement or non-movement of the wireless communication device and the wireless relay station is determined for the duration of the predicted connection time;
   Connecting (180), by the wireless communication device, if the movement or non-movement of the wireless communication device coincides with the movement or non-movement of the wireless relay station for the duration of the predicted connection time, to the wireless relay station.

2. The method according to claim 1, comprising determining (120), by the wireless communication device, whether the wireless relay station is a stationary wireless relay station or mobile wireless relay station, wherein the act of determining (150) whether the movement or non-movement of the wireless communication device coincides with the movement or non-movement of the wireless relay station is based on the act of determining whether the wireless relay station is a stationary wireless relay station or mobile wireless relay station.

3. The method according to claim 2, wherein the act of determining (120) whether the wireless relay station is a stationary wireless relay station or mobile wireless relay station comprises obtaining (125) identification information on the wireless relay station, the identification information comprising information on whether the wireless relay station is a stationary wireless relay station or mobile wireless relay station.

4. The method according to claim 3, wherein the wireless relay station is a vehicular relay station, and the identification information is received via a vehicular communication system.

5. The method according to one of the claims 1 to 4, comprising tracking (140), by the wireless communication device, a spatial distance between the wireless communication device and the wireless relay station, wherein the act of determining (150) whether the movement or non-movement of the wireless communication device coincides with the movement or non-movement of the wireless relay station is based on the tracking of the spatial distance.

6. The method according to one of the claims 1 to 4, comprising receiving (145), by the wireless communication device, information on a movement of the wireless relay station from the wireless relay station, wherein the act of determining whether the movement or non-movement of the wireless communication device coincides with the movement or non-movement of the wireless relay station is based on the received information on the movement of the wireless relay station.

7. The method according to claim 6, wherein the wireless relay station is a vehicular relay station, and the information on the movement of the wireless relay station is received via a vehicular communication system.

8. The method according to one of the claims 1 to 7, comprising determining (160), by the wireless communication device, a received signal power of the base station and of the wireless relay station, wherein the wireless communication device connects (180) to the wireless relay station if the received signal power of the wireless relay station is greater than the received signal power of the base station.

9. The method according to one of the claims 1 to 8, comprising determing (170), by the wireless communication device, an estimated Quality of Service, QoS, of the base station and of the wireless relay station, wherein the wireless communication device connects (180) to the wireless relay station if the estimated QoS of the wireless relay station is greater than the estimated QoS of the base station.

10. The method according to claim 9, comprising receiving (175), by the wireless communication device, information on the estimated QoS of the wireless relay station from the wireless relay station, wherein the act of determining (170) the estimated QoS of the wireless relay station is based on the received information on the estimated QoS of the wireless relay station.

11. The method according to one of the claims 1 to 10, further comprising, the following steps performed by a wireless relay station (200):

Providing (210), before the wireless communication device has started connecting (180) to the wireless relay station, information to the wireless communication device (100), the information comprising one or more of:

a) identification information on the wireless relay station, the identification information comprising information on whether the wireless relay station is a stationary wireless relay station or mobile wireless relay station, b) information on a movement of the wireless relay station; and

Establishing (220) a connection with the wireless communication device, wherein the connection is established based on the provided information.

12. The method according to claim 11, wherein the wireless relay station is a vehicular relay station, wherein the information is transmitted (210), by the wireless relay station, to the wireless communication device via a vehicular communication system, wherein the connection with the wireless communication device is established (220) via a non-vehicular communication system.

13. A computer program which, when executed on a computer, a processor, or a programmable hardware component, of a wireless communication device (100), enables the wireless communication device (100) to perform a method according to one of the claims 1 to 10.

14. A wireless communication device (100) that is suitable for being carried around by a user, the wireless communication device comprising an apparatus, the apparatus comprising:

at least one interface (12) for communicating with a base station and a wireless relay station; and one or more processors (14), configured to perform the method according to one of the claims 1 to 10.

15. A system comprising the wireless communication device according to claim 14 and an apparatus (20) for a wireless relay station (200), the apparatus for the wireless relay station comprising:

at least one interface (22) for communicating with the wireless communication device; and one or more processors (24), configured to perform the steps performed by the wireless relay station in a method according to one of the claims 11 and 12.

**Patentansprüche**

1. Verfahren, die folgenden Schritte umfassend, die durch eine Drahtloskommunikationsvorrichtung (100) ausgeführt werden, die geeignet ist, von einem Anwender mit sich geführt zu werden, wobei das Verfahren Folgendes umfasst:

Erkennen (110) eines Vorhandenseins einer Drahtlosrelaisstation (200), während die Drahtloskommunikationsvorrichtung mit einer Basisstation (250) verbunden ist, Bestimmen (130) einer vorhergesagten Verbindungszeit für eine Verbindung, die zwischen der Drahtloskommunikationsvorrichtung und der Drahtlosrelaisstation einzurichten ist, wobei die vorhergesagte Verbindungszeit eine Zeit ist, die für den Abschluss einer oder mehrerer bevorstehender Übertragungen der Drahtloskommunikationsvorrichtung erforderlich ist, Bestimmen (150), ob eine Bewegung oder Nichtbewegung der Drahtloskommunikationsvorrichtung mit einer Bewegung oder Nichtbewegung der Drahtlosrelaisstation zusammentrifft, basierend auf der vorhergesagten Verbindungszeit, durch Bestimmen, ob die Drahtloskommunikationsvorrichtung und die Drahtlosrelaisstation am gleichen Standort stationär sind oder ob sich die Drahtloskommunikationsvorrichtung zusammen mit der Drahtlosrelaisstation bewegt,

wobei das Zusammentreffen zwischen der Bewegung oder Nichtbewegung der Drahtloskommunikationsvorrichtung und der Drahtlosrelaisstation für die Dauer der vorhergesagten Verbindungszeit bestimmt wird,

Verbinden (180) mit der Drahtlosrelaisstation durch die Drahtloskommunikationsvorrichtung, wenn die Bewegung oder Nichtbewegung der Drahtloskommunikationsvorrichtung für die Dauer der vorhergesagten Verbindungszeit mit der Bewegung oder Nichtbewegung der Drahtlosrelaisstation zusammentrifft.

2. Verfahren nach Anspruch 1, das Bestimmen (120) durch die Drahtloskommunikationsvorrichtung umfassend, ob die Drahtlosrelaisstation eine stationäre Drahtlosrelaisstation oder eine mobile Drahtlosrelaisstation ist, wobei der Vorgang des Bestimmens (150), ob die Bewegung oder Nichtbewegung der Drahtloskommunikationsvorrichtung mit der Bewegung oder Nichtbewegung der Drahtlosrelaisstation zusammentrifft, auf dem Vorgang des Bestimmens basiert, ob die Drahtlosrelaisstation eine stationäre Drahtlosrelaisstation oder eine mobile Drahtlosrelaisstation ist.

3. Verfahren nach Anspruch 2, wobei der Vorgang des Bestimmens (120), ob die Drahtlosrelaisstation eine stationäre Drahtlosrelaisstation oder eine mobile Drahtlosrelaisstation ist, das Gewinnen (125) von Identifizierungsinformationen zu der Drahtlosrelaisstation umfasst, wobei die Identifizierungsinformationen Informationen darüber umfassen, ob die Drahtlosrelaisstation eine stationäre Drahtlosrelaisstation oder eine mobile Drahtlosrelaisstation ist.

4. Verfahren nach Anspruch 3, wobei die Drahtlosrelaisstation eine Fahrzeugrelaisstation ist und die Identifizierungsinformationen über ein Fahrzeugkommunikationssystem empfangen werden.

5. Verfahren nach einem der Ansprüche 1 bis 4, das Nachverfolgen (140) einer räumlichen Entfernung zwischen der Drahtloskommunikationsvorrichtung und der Drahtlosrelaisstation durch die Drahtloskommunikationsvorrichtung umfassend, wobei der Vorgang des Bestimmens (150), ob die Bewegung oder Nichtbewegung der Drahtloskommunikationsvorrichtung mit der Bewegung oder Nichtbewegung der Drahtlosrelaisstation zusammentrifft, auf dem Nachverfolgen der räumlichen Entfernung basiert.

6. Verfahren nach einem der Ansprüche 1 bis 4, das Empfangen (145) von Informationen über eine Bewegung der Drahtlosrelaisstation von der Drahtlosrelaisstation durch die Drahtloskommunikationsvorrichtung umfassend, wobei der Vorgang des Bestimmens, ob die Bewegung oder Nichtbewegung der Drahtloskommunikationsvorrichtung mit der Bewegung oder Nichtbewegung der Drahtlosrelaisstation zusammentrifft, auf den empfangenen Informationen über die Bewegung der Drahtlosrelaisstation basieren.

7. Verfahren nach Anspruch 6, wobei die Drahtlosrelaisstation eine Fahrzeugrelaisstation ist und die Informationen über die Bewegung der Drahtlosrelaisstation über ein Fahrzeugkommunikationssystem empfangen werden.

8. Verfahren nach einem der Ansprüche 1 bis 7, das Bestimmen (160) einer empfangenen Signalleistung der Basisstation und der Drahtlosrelaisstation durch die Drahtloskommunikationsvorrichtung umfassend, wobei sich die Drahtloskommunikationsvorrichtung mit der Drahtlosrelaisstation verbindet (180), wenn die empfangene Signalleistung der Drahtlosrelaisstation größer als die empfangene Signalleistung der Basisstation ist.

9. Verfahren nach einem der Ansprüche 1 bis 8, das Bestimmen (170) einer geschätzten Dienstgüte, QoS, der Basisstation und der Drahtlosrelaisstation durch die Drahtloskommunikationsvorrichtung umfassend, wobei sich die Drahtloskommunikationsvorrichtung mit der Drahtlosrelaisstation verbindet (180), wenn die geschätzte QoS der Drahtlosrelaisstation besser als die geschätzte QoS der Basisstation ist.

10. Verfahren nach Anspruch 9, das Empfangen (175) von Informationen über die geschätzte QoS der Drahtlosrelaisstation von der Drahtlosrelaisstation durch die Drahtloskommunikationsvorrichtung umfassend, wobei der Vorgang des Bestimmens (170) der geschätzten QoS der Drahtlosrelaisstation auf den empfangenen Informationen über die geschätzte QoS der Drahtlosrelaisstation basiert.

11. Verfahren nach einem der Ansprüche 1 bis 10, ferner die folgenden Schritte umfassend, die von einer Drahtlosrelaisstation (200) ausgeführt werden:

Bereitstellen (210) von Informationen für die Drahtloskommunikationsvorrichtung (100), bevor sich die Drahtloskommunikationsvorrichtung mit der Drahtlosrelaisstation zu verbinden (180) beginnt, wobei die Informationen eines oder mehreres des Folgenden umfassen:

a) Identifizierungsinformationen zur Drahtlosrelaisstation, wobei die Identifizierungsinformationen Informationen darüber umfassen, ob die Drahtlosrelaisstation eine stationäre Drahtlosrelaisstation oder eine mobile Drahtlosrelaisstation ist,

b) Informationen über eine Bewegung der Drahtlosrelaisstation und

Einrichten (220) einer Verbindung mit der Drahtloskommunikationsvorrichtung, wobei die Verbindung basierend auf den bereitgestellten Informationen eingerichtet wird.

12. Verfahren nach Anspruch 11, wobei die Drahtlosrelaisstation eine Fahrzeugrelaisstation ist, wobei die Informationen durch die Drahtlosrelaisstation über ein Fahrzeugkommunikationssystem an die Drahtloskommunikationsvorrichtung übertragen (210) werden, wobei die Verbindung mit der Drahtloskommunikationsvorrichtung über ein Nicht-Fahrzeugkommunikationssystem eingerichtet (220) wird.

13. Computerprogramm, das bei Ausführung auf einem Computer, einem Prozessor oder einer programmierbaren Hardware-Komponente einer Drahtloskommunikationsvorrichtung (100) die Drahtloskommunikationsvorrichtung (100) in die Lage versetzt, ein Verfahren nach einem der Ansprüche 1 bis 10 auszuführen.

14. Drahtloskommunikationsvorrichtung (100), die geeignet ist, von einem Anwender mit sich geführt zu werden, wobei die Drahtloskommunikationsvorrichtung eine Einrichtung umfasst, wobei die Einrichtung Folgendes umfasst:

mindestens eine Schnittstelle (12) für die Kommunikation mit einer Basisstation und einer Drahtlosrelaisstation und

mindestens eine Schnittstelle (14), die dafür konfiguriert ist, das Verfahren nach einem der Ansprüche 1 bis 10 auszuführen.

15. System, die Drahtloskommunikationsvorrichtung nach Anspruch 14 und eine Einrichtung (20) für eine Drahtlosrelaisstation (200) umfassend, wobei die Einrichtung für die Drahtlosrelaisstation Folgendes umfasst:

mindestens eine Schnittstelle (22) zum Kommunizieren mit der Drahtloskommunikationsvorrichtung und

einen oder mehrere Prozessoren (24), die dafür konfiguriert sind, die Schritte auszuführen, die von der Drahtlosrelaisstation in einem Verfahren nach einem der Ansprüche 11 und 12 ausgeführt werden.

**Revendications**

1. Procédé comprenant les étapes suivantes réalisées par un dispositif de communication sans fil (100) qui convient pour être transporté par un utilisateur, le procédé comprenant :

le fait de détecter (110), tandis que le dispositif de communication sans fil est connecté à une station de base (250), une présence d'une station relais sans fil (200) ;

le fait de déterminer (130) un temps de connexion prévu pour qu'une connexion soit établie entre le dispositif de communication sans fil et la station relais sans fil, le temps de connexion prévu étant un temps requis pour compléter une ou plusieurs transmissions imminentes du dispositif de communication sans fil ;

le fait de déterminer (150) si un déplacement ou un non déplacement du dispositif de communication sans fil coïncide avec un déplacement ou un non déplacement de la station relais sans fil sur la base du temps de connexion prévu, en déterminant si le dispositif de communication sans fil et la station relais sans fil sont stationnaires au niveau du même emplacement, ou si le dispositif de communication sans fil se déplace à l'unisson avec la station relais sans fil, la coïncidence entre le mouvement ou le non-mouvement du dispositif de communication sans fil et la station relais sans fil étant déterminés pour la durée du temps de connexion prévu ;

la connexion (180), par le dispositif de communication sans fil, si le mouvement ou le non-mouvement du dispositif de communication sans fil coïncide avec le mouvement ou le non-mouvement de la station relais sans fil pour la durée du temps de connexion prévu, à la station relais sans fil.

2. Procédé selon la revendication 1, comprenant le fait de déterminer (120), par le dispositif de communication sans fil, si la station relais sans fil est une station relais sans fil stationnaire ou une station relais sans fil mobile, l'action consistant à déterminer (150) si le déplacement ou le non déplacement du dispositif de communication sans fil coïncide avec le déplacement ou le non déplacement de la station relais sans fil étant basé sur l'action consistant à déterminer si la station relais sans fil est une station relais sans fil stationnaire ou une station relais sans fil mobile.

3. Procédé selon la revendication 2, dans lequel l'action consistant à déterminer si la station relais sans fil est une station relais sans fil stationnaire ou une station relais sans fil mobile comprend le fait d'obtenir (125) des informations d'identification sur la station relais sans fil, les informations d'identification comprenant des informations sur le fait de savoir si la station relais sans fil est une station relais sans fil stationnaire ou une station relais sans fil mobile.

**4.** Procédé selon la revendication 3, dans lequel la station relais sans fil est une station relais véhiculaire, et les informations d'identification sont reçues via un système de communication véhiculaire.

**5.** Procédé selon l'une quelconque des revendications 1 à 4, comprenant le suivi (140), par le dispositif de communication sans fil, d'une distance spatiale entre le dispositif de communication sans fil et la station relais sans fil, l'action consistant à déterminer (150) si le déplacement ou le non déplacement du dispositif de communication sans fil coïncide avec le déplacement ou le non déplacement de la station relais sans fil étant basé sur le suivi de la distance spatiale.

**6.** Procédé selon l'une quelconque des revendications 1 à 4, comprenant la réception (145), par le dispositif de communication sans fil, d'informations sur un déplacement de la station relais sans fil en provenance de la station relais sans fil, dans lequel l'action consistant à déterminer si le déplacement ou le non déplacement du dispositif de communication sans fil coïncide avec le déplacement ou le non déplacement de la station relais sans fil est basée sur des informations reçues sur le déplacement de la station relais sans fil.

**7.** Procédé selon la revendication 6, dans lequel la station relais sans fil est une station relais véhiculaire, et les informations sur le déplacement de la station relais sans fil sont reçues via un système de communication véhiculaire.

**8.** Procédé selon l'une quelconque des revendications 1 à 7, comprenant la détermination (160), par le dispositif de communication sans fil, d'une puissance du signal reçu de la station de base et de la station relais sans fil, le dispositif de communication sans fil se connectant (180) à la station relais sans fil si la puissance du signal reçu de la station relais sans fil est supérieure à la puissance du signal reçu de la station de base.

**9.** Procédé selon l'une quelconque des revendications 1 à 8, comprenant la détermination (170), par le dispositif de communication sans fil, d'une qualité de service (*Quality of Service,* QoS) estimée de la station de base et de la station relais sans fil, le dispositif de communication sans fil se connectant (180) à la station relais sans fil si la QoS estimée de la station relais sans fil est supérieure à la QoS estimée de la station de base.

**10.** Procédé selon la revendication 9, comprenant la réception (175), par le dispositif de communication sans fil, d'informations sur la QoS estimée de la station relais sans fil en provenance de la station relais sans fil, l'action de détermination (170) de la QoS estimée de la station relais sans fil étant sur basée sur des informations reçues sur la QoS estimée de la station relais sans fil.

**11.** Procédé selon l'une quelconque des revendications 1 à 10, comprenant en outre, les étapes suivantes réalisées par une station relais sans fil (200) :

le fait de fournir (210), avant que le dispositif de communication sans fil n'ait commencé la connexion (180) à la station relais sans fil, des informations au dispositif de communication sans fil (100), les informations comprenant un ou plusieurs types d'informations parmi :

a) des informations d'identification sur la station relais sans fil, les informations d'identification comprenant des informations sur le fait de savoir si la station relais sans fil est une station relais sans fil stationnaire ou une station relais sans fil mobile, b) des informations sur un déplacement de la station relais sans fil ; et

l'établissement (220) d'une connexion au dispositif de communication sans fil, la connexion étant établie sur la base des informations fournies.

**12.** Procédé selon la revendication 11, dans lequel la station relais sans fil est une station relais véhiculaire, les informations étant transmises (210), par la station relais sans fil, au dispositif de communication sans fil via un système de communication véhiculaire, la connexion au dispositif de communication sans fil étant établie (220) via un non système de communication véhiculaire.

**13.** Programme informatique qui, lorsqu'il est exécuté sur un ordinateur, un processeur ou un composant matériel programmable, d'un dispositif de communication sans fil (100), permet au dispositif de communication sans fil (100) de réaliser un procédé selon l'une quelconque des revendications 1 à 10.

**14.** Dispositif de communication sans fil (100) qui convient pour être transporté par un utilisateur, le dispositif de communication sans fil comprenant un appareil, l'appareil comprenant :

au moins une interface (12) pour communiquer avec une station de base et une station relais sans fil ; et
un ou plusieurs processeurs (14), configurés pour réaliser le procédé selon l'une quelconque des revendications 1 à 10.

**15.** Système comprenant le dispositif de communication sans fil selon la revendication 14 et un appareil (20) pour une station relais sans fil (200), l'appareil pour la station relais sans fil comprenant :

au moins une interface (22) pour communiquer avec le dispositif de communication sans fil ; et un ou plusieurs processeurs (24), configurés pour réaliser les étapes réalisées par la station relais sans fil dans un procédé selon l'une quelconque des revendications 11 et 12.

DETECTING A PRESENCE OF A WIRELESS RELAY STATION ⌐~110

DETERMINING WHETHER A MOVEMENT OR NON-MOVEMENT OF THE WIRELESS COMMUNICATION DEVICE COINCIDES WITH MOVEMENT OR NON-MOVEMENT OF WIRELESS RELAY STATION ⌐~150

CONNECTING TO THE WIRELESS RELAY STATION ⌐~180

## FIG. 1a

DETECTING A PRESENCE OF A WIRELESS RELAY STATION ⌐~110

DETERMINING WHETHER THE WIRELESS RELAY STATION IS A STATIONARY OR MOBILE WIRELESS RELAY STATION ⌐~120

OBTAINING IDENTIFICATION INFORMATION FROM THE WIRELESS RELAY STATION ⌐~125

DETERMINING A PREDICTED CONNECTION TIME ⌐~130

TRACKING A SPATIAL DISTANCE ⌐~140

RECEIVING INFORMATION ON A MOVEMENT ⌐~145

DETERMINING WHETHER A MOVEMENT OR NON-MOVEMENT OF THE WIRELESS COMMUNICATION DEVICE COINCIDES WITH MOVEMENT OR NON-MOVEMENT OF WIRELESS RELAY STATION ⌐~150

DETERMINING A RECEIVED SIGNAL POWER OF A BASE STATION AND OF THE WIRELESS RELAY STATION ⌐~160

DETERMINING AN ESTIMATED QOS OF THE BASE STATION AND OF THE WIRELESS RELAY STATION ⌐~170

RECEIVING INFORMATION ON THE ESTIMATED QOS ⌐~175

CONNECTING TO THE WIRELESS RELAY STATION ⌐~180

## FIG. 1b

INTERFACE ~ 12

100

10

PROCESSOR ~ 14

~ 250

20 ~ 200

205

FIG. 1c

| PROVIDING INFORMATION | ~ 210 |
| ESTABLISHING A CONNECTION | ~ 220 |

FIG. 2a

200

INTERFACE ~ 22

20

PROCESSOR ~ 24

FIG. 2b

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130337872 A1
- WO 2018202798 A1
- WO 2018196497 A1
- WO 2018085586 A1